# FASCICULE DE BREVET EUROPEEN

(11) **EP 0 232 658 B1**
(45) Date de publication et mention de la délivrance du brevet: **14.02.1996**
(21) Numéro de dépôt: 86402945.9
(22) Date de dépôt: 26.12.1986
(51) Int. Cl.: F23C 3/00, F23G 5/32, F23G 7/06, C10J 3/46, F23G 7/00, B01J 12/00, B01J 19/24

(54) **Procédé et dispositif de réaction exothermique entre des gaz**
Verfahren und Vorrichtung zur exothermischen Reaktion zwischen Gasen
Process and device for exothermic reaction of gases

(30) Priorité: 02.01.1986 FR 8600009
(43) Date de publication de la demande: 19.08.1987
(73) Titulaire: RHONE-POULENC CHIMIE, F-92408 Courbevoie Cédex (FR)
(72) Inventeur: Prudhon, François, F-78000 Versailles (FR)
(74) Mandataire: Fabre, Madeleine-France

(56) Documents cités:
- EP-A- 0 127 520
- EP-A- 0 128 074
- EP-A- 0 128 792
- BE-A- 657 267
- FR-A- 1 191 703
- FR-A- 2 249 585
- FR-A- 2 366 517
- FR-A- 2 567 417
- US-A- 1 437 649
- US-A- 2 850 875

## Description

La présente invention a trait à un procédé d'obtention d'une phase gazeuse à haute température.

Elle concerne également un dispositif pour sa mise en oeuvre et les applications faisant appel à des réactions à hautes températures en phase gazeuse, et/ou sous l'action de ladite phase gazeuse dans le but soit d'obtenir divers produits, soit de traiter des phases liquides ou gazeuses, chargées ou non de solides et solides pulvérisables, par exemple dans le cas du traitement d'effluents pollués.

On sait, en effet que l'on fait de plus en plus appel à des réactions à haute température avec des milieux renfermant au moins une phase gazeuse dans des buts aussi variés que par exemple la génération de gaz chauds ou de vapeur d'eau surchauffée, l'hydrogénation d'une matière charbonneuse pulvérisée, la gazéification ou le traitement d'effluents en vue de leur dépollution.

L'on se heurte à la difficulté de répondre à la fois à des exigences chimiques très sévères et à des contraintes technologiques importantes. En effet, la phase gazeuse résultante doit généralement se trouver portée rapidement et de façon régulièrement répartie à des températures supérieures à 1 000°C. Or, l'on sait que la zone de température entre 800 et 1 000°C correspond à une zone très critique puisque favorable à la formation de produits indésirables tels que la dioxine (produits chlorés) ou matières goudronneuses (gazéification). Il convient donc non seulement de se situer au-dessus de cette zone, mais aussi de la franchir sans subit de conséquences néfastes.

Par ailleurs, technologiquement, la limite pratique d'utilisation des aciers classiques se situe généralement autour de 800°C.

A elles seules ces exigences excluent pratiquement de faire appel à des techniques du type à lit fluidisé et expliquent l'intérêt porté aux dispositifs dits à lits entraînes, ou à écoulements entraînés, intérêt manifesté dans la littérature par exemple dans le FR 2 419 969 de Rockwell ou le FR 2 286 104 de Texaco.

On conçoit aisément que la formation d'une zone totalement homogène en tempe rature dans ce contexte n'est pas envisageable, cette solution impliquant des températures de paroi trop élevées.

C'est pourquoi Rockwell a préconisé de faire appel à la technologie dite des moteurs-fusées (voir exemple FR 2 419 969, p. 10 et 11). Selon cette technologie, on ménage au niveau des parois une couche dite limite au moyen d'un composé gazeux (en l'occurrence l'hydrogène) n'ayant pas réagi, de sorte à former une "barrière protectrice". Cette solution n'est pas utilisable lorsque l'on désire par exemple conduire des réactions au voisinage de la stoechiométrie.

Or, la demanderesse, dans la demande de brevet FR-A-2567417, ou dans la demande de brevet européen correspondante EP-A-0171316, qui constitue un art antérieur au titre de l'article 54(3) et (4) CBE a proposé une solution reposant sur un concept totalement différent, selon lequel on injecte les flux de gaz dans une zone de mélange en prédivisant chaque flux, et en formant des motifs répétitifs de mélanges élémentaires à partir desdits flux prédivisés, ce qui se traduit par un mélange très rapide et isoréparti, permettant des réactions stables à haute température.

Bien que cette méthode ait conduit, d'une façon générale à de bons résultats, l'on peut observer parfois des dépôts de carbone sur les parois, en particulier dans le cas de la combustion d'hydrocarbures à l'état gazeux en défaut comburant.

Or, le but de ce mélange très rapide et isoréparti, est de permettre la réalisation de réactions à très haute température.

La demanderesse s'est alors aperçue qu'en maintenant les parois à une température suffisamment basse, l'on pouvait éviter l'inconvénient des dépôts par exemple de carbone, sans altérer la qualité de la combustion (ou de la réaction).

Poursuivant ses travaux, la demanderesse a observé que contrairement au préjugé selon lequel la présence d'une paroi froide ou refroidie au voisinage de la zone de combustion ou de réaction était néfaste, il était possible, dans certaines conditions, de bénéficier des avantages d'une zone à température élevée, tout en évitant les inconvénients liés à la présence d'une zone à paroi froide : phénomène de coincement de la flamme, réactions incomplètes et/ou parasites et/ou dépôts à la paroi, pertes thermiques importantes créant des inhomogénéités locales dans les produits de la réaction.

La demande de brevet FR-A-2249585 décrit un procédé dans lequel est réalisée une combustion très intensive avec obtention d'une phase gazeuse à haute température. Dans un premier temps dudit procédé, on forme des motifs répétés de mélanges élémentaires ; mais un brassage énergique des flux, qui résulte d'une injection d'air en contre-rotation, mis en oeuvre dans un deuxième temps du procédé, va détruire ces mélanges répétitifs. De plus, il existe dans ce procédé un effet de choc entre les flux pour favoriser leur brassage.

L'invention a pour objet un procédé à flamme et/ou zone de réaction courtes, très chaude, homogène en composition, à faible inertie thermique.

Pratiquement, l'invention a trait au procédé défini à la revendication 1.

Avantageusement, on impartit aux motifs ou mélanges élémentaires un mouvement global d'entraînement à partir d'au moins un des flux servant à former les motifs ou mélanges élémentaires.

On forme ainsi un ensemble homogène de mélanges élémentaires homogènes issus des motifs élémentaires précités avant le début de la réaction qui est d'autant plus rapide qu'elle a lieu entre gaz, dans des proportions locales proches de la stoechiométrie, correspondant aux vitesses maximales de réaction. Les mélanges élémentaires homogènes doivent donc être réalisés dans un délai d'autant plus court que cette réaction est rapide.

Les gaz étant disponibles en amont du dispositif à une pression donnée, donc à une vitesse d'injection définie, les mélanges élémentaires sont d'autant plus vite achevés qu'ils sont réalisés à faible échelle.

La portée d'un jet à l'issue d'un orifice étant proportionnelle au diamètre dudit orifice et indépendante du débit, les motifs répétitifs générateurs des mélanges élémentaires seront avantageusement constitués d'orifices rapprochés de petites dimensions.

Pratiquement, de manière simple, on prédivise chaque flux de gaz en formant des motifs répétitifs d'injection tels que couples d'orifice voisins.

Ces motifs, qui sont répétitifs d'un point de vue géométrique, doivent l'être aussi d'un point de vue hydrodynamique, en assurant l'équirépartition des débits. Avantageusement, cet effet est obtenu en imposant à la vitesse d'éjection Ve d'un gaz à travers les orifices qui lui sont attribués dans lesdits motifs répétitifs une valeur égale à au moins 3 fois, de préférence 6 fois la valeur de la vitesse de distribution Vd en amont desdits orifices, dans le cas de l'air dans des conditions normales de température et de pression. On obtient ainsi un ensemble homogène de mélanges élémentaires homogènes dans un état de mélange comparable à celui observé à l'issue de la zone d'effet retard dans le cas des mélanges gaz-liquide.

On impartit à l'un au moins de ces flux un mouvement tourbillon symétrique avec un débit suffisant d'une phase gazeuse pour provoquer un effet d'entraînement de l'autre flux gazeux (ou des autres flux gazeux).

Puis, on prévoit en aval une zone de confinement de manière à provoquer la rotation dudit flux autour de l'axe de l'écoulement ultérieur, en assurant la fonction d'entraînement global.

Cette manière d'opérer permet d'obtenir un mélange très rapide à l'échelle de l'appareil des mélanges élémentaires obtenus à l'échelle des motifs répétitifs d'injection, et un début de réaction sans omission ni répétition, d'où une densité de réactions très forte puisque dans un volume total de réaction réduit au minimum.

Il en résulte l'obtention d'une flamme (ou d'une zone de réaction) très courte et à haute intensité et la production de températures locales très élevées.

Globalement, on peut considérer que l'on sépare les deux fonctions de mélange puis de réaction sur une distance faible correspondant à un temps très bref, les gaz étant soumis à des traitements successifs, chacun d'eux étant homogène, ce qui globalement revient à une évolution de type piston.

Cette séparation des fonctions est maîrisée par la création de la zone centrale précitée qui est séparée matériellement de la zone de combustion. On alimente les phases gazeuses de manière concentrique avec possibilité d'étagement de l'alimentation d'au moins une des deux phases.

Avantageusement, cette zone centrale est également refroidie.

Etonnament, l'on observe que le niveau sonore obtenu est faible autorisant l'application du procédé à des usages domestiques. On pense que ce résultat est dû a l'empêchement ainsi créé, par l'occupation de la zone centrale, du recyclage de la phase gazeuse située en aval de ladite zone centrale.

Une phase gazeuse est constituée par le carburant et l'autre phase par le comburant. Le comburant est alimenté de manière étagée, telle que couronnes d'alimentation coaxiales successives. L'alimentation est telle que le premier étage correspond à un défaut en comburant, et que le second permet d'atteindre, voire de dépasser la stoechiométrie. Eventuellement, on peut prévoir d'autres étages de dilution. La zone centrale ou noyau délimite donc une zone couronne où naît la combustion initialement en excès de carburant, ou combustible, comportant par exemple, un grand nombre de couples d'injection de gaz carburant et d'air comburant. Chaque couple crée un mélange élémentaire homogène où naît la flamme élémentaire initiale, et où la pression partielle locale d'inertes est minimale (absence locale de recirculation de gaz brûlés), ce qui est un premier facteur contribuant à la grande vitesse de réaction.

A partir de la seconde ligne d'injection de comburant (air) on passe localement par le maximum de température (stoechiométrie) donc de vitesse de réaction, et donc de "retour de flamme", cette dernière vitesse étant encore augmentée par la turbulence locale au droit des couples précités. Cet ensemble de phénomènes accentue la stabilité locale de flamme.

Les lignes de trous ultérieures éventuelles correspondent à une dilution qui a pour effet de diminuer la température globale et d'accentuer le moment cinétique de l'ensemble. Ce dernier provoque le mouvement de recyclage stabilisant de façon globale, cette fois, la zone chaude sur le fond refroidi de l'appareil.

Le procédé de l'invention repose donc sur un concept qui permet d'améliorer la stabilité et la souplesse d'un réacteur intensif gaz-gaz.

Ce concept peut être mis en oeuvre dans un procédé dit à pulvérisation vaporisante tel que décrit et revendiqué dans l'E.P-A-128792.

On sait qu'un problème posé important dans le cas du brûlage des combustibles lourds est celui d'une combustion propre, c'est-à-dire sans émission finale de particules carbonées.

Selon l'E.P-A-128792 :
- on introduit dans une première zone un courant gazeux comburant selon des trajectoires hélicoïdales symétriques par rapport à leur axe commun et on introduit un courant de fluide combustible, de sorte à réaliser une première phase de combustion dispersante,
- on force l'écoulement résultant à travers un passage restreint dans une second zone, de manière à lui conférer la forme d'un écoulement puits-tourbillon symétrique.
- on introduit la substance combustible à traiter dans la zone axiale en dépression relative dudit écoulement puits-tourbillon symétrique et l'on provoque une seconde combustion grâce à un second courant gazeux comburante dans la second -zone, les quantités de gaz comburant et combustible introduits dans la première zone étant suffisantes pour provoquer en plus de sa dispersion, la vaporisation de la substance à traiter à l'entrée de la seconde zone.

Ce procédé suppose pour sa réussite l'obtention d'une phase gazeuse très chaude.

Le procédé, selon l'invention, peut avantageusement être mis en oeuvre pour l'obtention de cette phase gazeuse dans la première étape du procédé dit à pulvérisation vaporisante.

Bien évidemment, le procédé de l'invention s'applique à tous les cas de brûlage ou de réaction à température élevée de substances qu'elles se présentent sous forme gazeuse, liquide ou solide pulvérisable.

Elle peut être utilisée notamment dans le cas de suspension de matières solides pulvérisables telles que charbon, lignites ou équivalents, que ces suspensions se présentent sous forme de solides en suspension dans une phase gazeuse ou de suspensions pompables dans une phase liquide ou organique, que le domaine d'application soit celui de l'incinération, par exemple dans le cas de l'anti-pollution, ou celui de la chimie dans le cas de la production de gaz de synthèse par exemple.

Dans le cas de produits tels qu'hydrocarbures pouvant donner lieu à des produits de décomposition indésirables occasionnant des dépôts, on peut maintenir les parois qui délimitent la zone de mélange et de début de réaction, à une température suffisamment basse pour éviter pratiquement la décomposition locale des produits de la réaction.

Le procédé de l'invention permet une miniaturisation de l'appareillage, avec des effets de parois diminués, autorisant ainsi une protection thermique efficace par refroidissement desdites parois sans effet néfaste significatif sur la température moyenne de la réaction et sur sa sélectivité.

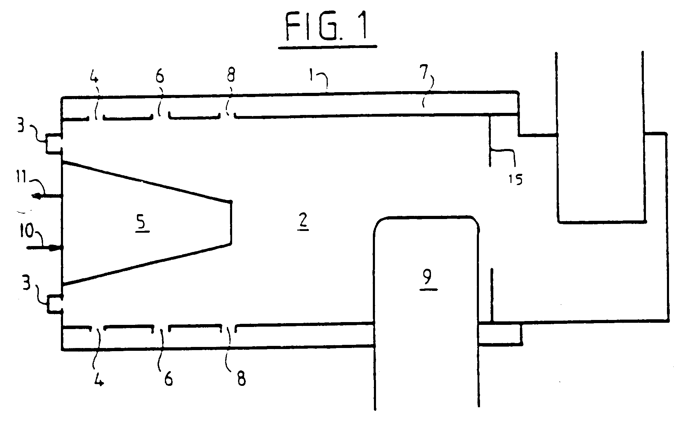

L'invention concerne également un dispositif illustré aux figures 1 à 4.

La figure 1 représente une vue d'un dispositif selon l'invention.

Les figures 2 et 3 illustrent des modes de réalisation avec injection d'une autre phase liquide ou solide.

La figure 4 est une vue schématique de diverses mises en oeuvre possibles.

Le dispositif selon l'invention comprend :
- une enveloppe (1) dans laquelle débouchent les amenées de gaz, les familles d'injection de gaz étant disposées de manière à former des motifs répétitifs (3) (4) ... de mélanges élémentaires ;
- le dispositif se caractérisant par le fait qu'il présente un élément rigide ou noyau (5) à l'intérieur de la chambre (2), les amenées de gaz (3) (4) ... débouchant dans la zone annulaire délimitée par ledit élément rigide (5).

Avantageusement, au moins une phase gazeuse est alimentée au moyen des familles de gaz (4) (6).

Une phase gazeuse est alimentée par une entrée tangentielle (9) par exemple au moyen d'un espace annulaire (7). Cette phase gazeuse pénètre dans la chambre (2) au moyen d'au moins deux familles de perforations (4), (6), (8).

L'alimentation de la phase gazeuse par les perforations (4) est telle que les mélanges élémentaires formés par les alimentations (3) (4) correspondent à une alimentation en défaut de la phase (4) par rapport à la stoechiométrie. Le complément de la seconde phase nécessaire est fourni par les perforations (6), (8) etc ...

Bien évidemment, le dispositif selon l'invention, peut comprendre plus de trois familles d'orifices.

D'autre part, il est clair qu'une famille de perforations peut être remplacée par une fente (moyen équivalent dans sa fonction à une couronne de trous), et ceci plus particulièrement au niveau des étages assurant la dilution (perforations (8) par exemple).

Selon la forme de réalisation représentée, les orifices sont répartis selon des couronnes de trous, et le noyau (5) est refroidi par une circulation de fluide réfrigérant (10) (11).

Eventuellement, le dispositif peut être muni d'un diaphragme (15) à l'intérieur de la chambre 2.

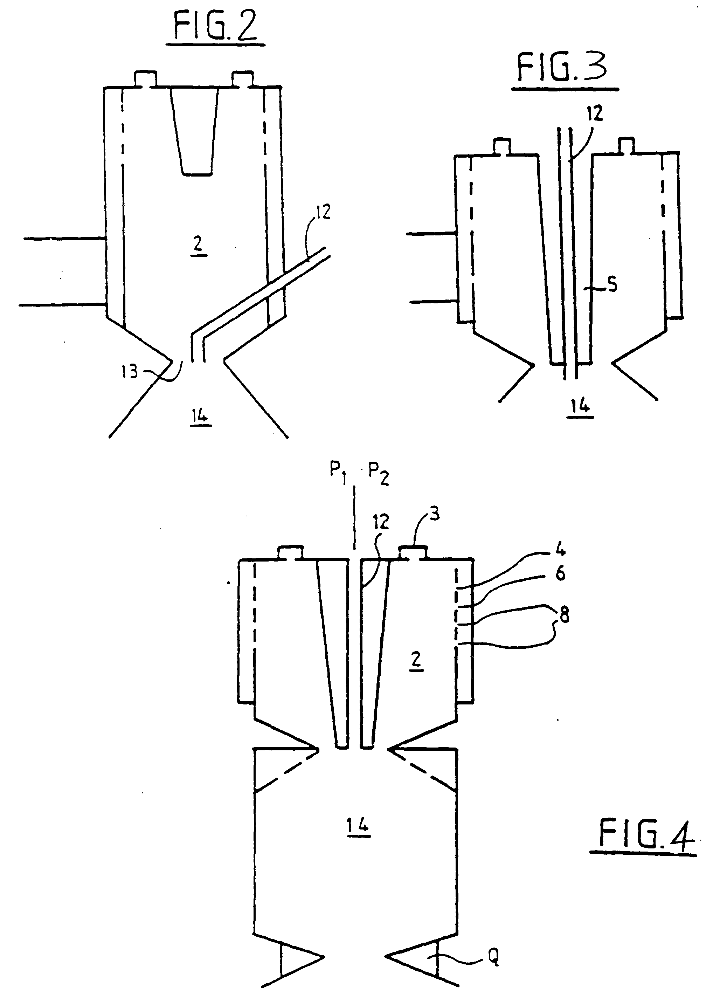

Les figures 2 et 3 illustrent d'autres formes de mise en oeuvre servant à traiter une phase liquide chargée ou non de solide, ou une matière solide amenée sous forme pulvérisable.

Selon la forme de réalisation illustrée à la figure 2, on amène un troisième fluide (phase axiale) à l'aide de la tubulure (12) avantageusement également refroidie, cette tubulure débouchant au voisinage du plan du passage restreint (13) de sortie de la chambre (2), de sorte à conférer aux gaz issus de la chambre 2 la forme d'un écoulement puits-tourbillon symétrique. Ce troisième fluide peut être gazeux ou liquide, éventuellement chargé et pulvérisable en (14) par transfert de l'énergie mécanique et thermique des gaz (3 + 4) ayant réagi, ces gaz s'étant vu impartir une quantité de mouvement à leur entrée en (14) d'au moins 100 fois celle de la phase axiale (tubulure) et avantageusement entre 1 000 et 10 000 fois la valeur de celle-ci quand ladite phase axiale est liquide ou sous forme de suspensions pulvérisables, ces conditions provoquant la dispersion, puis la prise en charge et le traitement de la phase axiale par la phase gazeuse issue de (2), dans les conditions déjà décrites par la demanderesse dans les FR 2 257 326 et 2 058 818 notamment.

On peut amener en (14) par (12) plusieurs fluides introduits coaxialement.

Un traitement particulier mis en oeuvre ainsi en (14) est ce que la demanderesse a désigné par pulvérisation vaporisante, combinaison organisée dans l'écoulement, confiné en (14) et dit "puits-tourbillon symétrique", des effets mécaniques et thermiques de la phase gaz sur la phase axiale généralement liquide.

La figure 3 représente une autre forme d'introduction de la phase axiale gazeuse, liquide ou solide à traiter, selon laquelle la tubulure (12) est axiale et traverse l'élément rigide ou noyau (5).

Dans le cas où la phase axiale est gazeuse, un aménagement particulièrement avantageux de l'extrémité aval de la tubulure (12) permet de réaliser la prédivision du jet de la phase axiale.

Le procédé et le dispositif selon l'invention peuvent être mis en oeuvre pour de nombreuses applications, notamment dans les domaines de :

1) La dépollution ; que l'effluent pollué à traiter se présente sous forme gazeuse, liquide ou solide. Dans le premier cas, le gaz effluent sera avantageusement amené sous forme d'un flux alimenté tangentiellement s'il joue en même temps le rôle de comburant principal (air pollué par exemple).

Dans le cas d'un liquide ou d'un solide pulvérisable, l'effluent sera amené axialement ainsi que pour un gaz inerte ou combustible. Dans ce dernier cas, on pourra aussi utiliser les orifices (3).

Un exemple d'application illustrant les avantages du procédé de l'invention est celui de l'incinération des résidus chlorés.

Les normes actuelles en la matière recommandent, voire exigent de réaliser la combustion avec un fort excès d'air. Selon les mêmes normes, les fumées résultant de cette combustion doivent elles-mêmes contenir un excès d'air.

Cette exigence reflète bien le fait qu'il n'existe pas de solution satisfaisante au problème qui est posé.

En effet, cette exigence signifie que l'on augmente la pression partielle en oxygène, ce qui a plusieurs conséquences fâcheuses tout d'abord :
- l'abaissement de la température à une valeur relativement basse ;
- et aussi la formation d'impuretés gazeuses telles que NOₓ(en raison de la plus grande quantité d'azote introduite en même temps que l'excès d'oxygène) et Cl₂, à une température favorable à la formation d'impuretés polluantes telles que la dioxine.

L'invention permet d'aller à l'encontre de cette démarche entérinée par une normalisation de fait ou de droit.

Dans ce cas précis, selon l'invention, en raison d'un mélange initial en défaut d'oxygène par rapport à la stoechiométrie, suivi d'une combustion en phase généralement gazeuse au voisinage de la stoechiométrie, il est possible de réaliser l'incinération à haute température avec une pression partielle en oxygène significativement plus faible que celle utilisée selon l'état de l'art.

Par ailleurs, il est possible selon l'invention d'introduire de la vapeur d'eau, la vapeur d'eau jouant une double fonction, de volant thermique d'une part, de moyen d'action sur les équilibres d'autre part.

De cette manière, on évite l'inconvénient de l'art antérieur selon lequel le volant thermique est obtenu par un excès d'air, donc avec introduction en particulier d'azote, et formation de NOx, et l'on déplace par exemple l'équilibre de Deacon vers l'HCl (moins de Cl₂).

Enfin, d'une manière générale, le procédé selon l'invention permet le contrôle du système par le contrôle des températures aux divers points critiques du procédé, ce qui constitue un avantage important dans la conduite du procédé.

Cet exemple constitue ainsi une vérification de la contribution du procédé de l'invention à l'état de l'art et de ses avantages, tant sur le plan :
- de la technologie (dispositifs plus petits et plus performants autorisés par les cinétiques de réaction très élevées) ;
- qu'énergétique : selon les procédés de l'art antérieur, il est nécessaire de compenser l'effet de dilution dû à l'excès d'air, donc de baisse de température, par une plus grande consommation de combustible ;
- que qualité de la dépollution, en raison des températures élevées d'incinération assurant les combustions rapides complètes.

2) La chimie en général. Les tableaux ci-après donnent une liste non exhaustive de possibilités de mise en oeuvre.

Un domaine touchant à la chimie concerne la gazéification. Le dispositif selon l'invention peut se substituer avantageusement à d'autres dispositifs connus dits de type à lit entraîné.

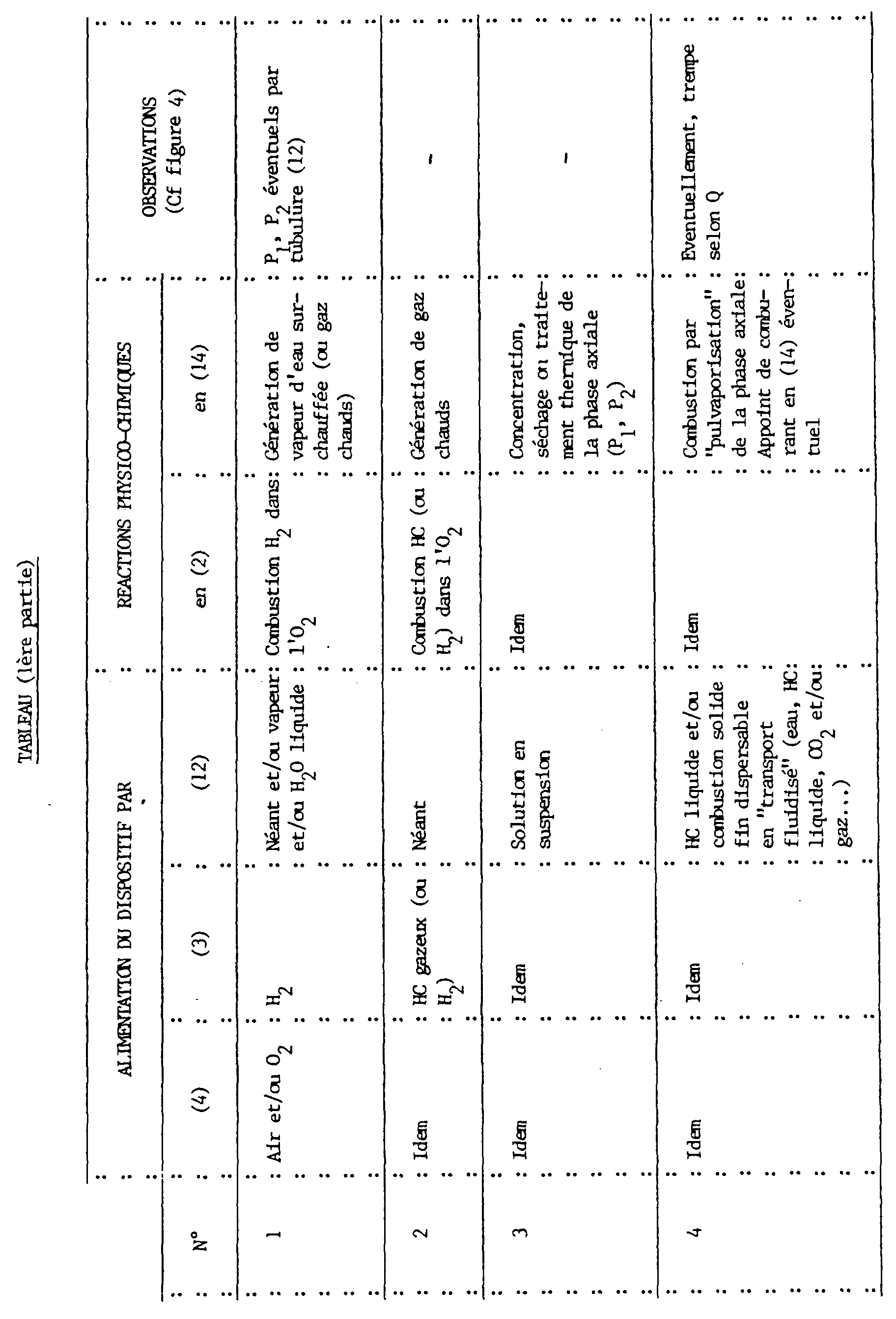

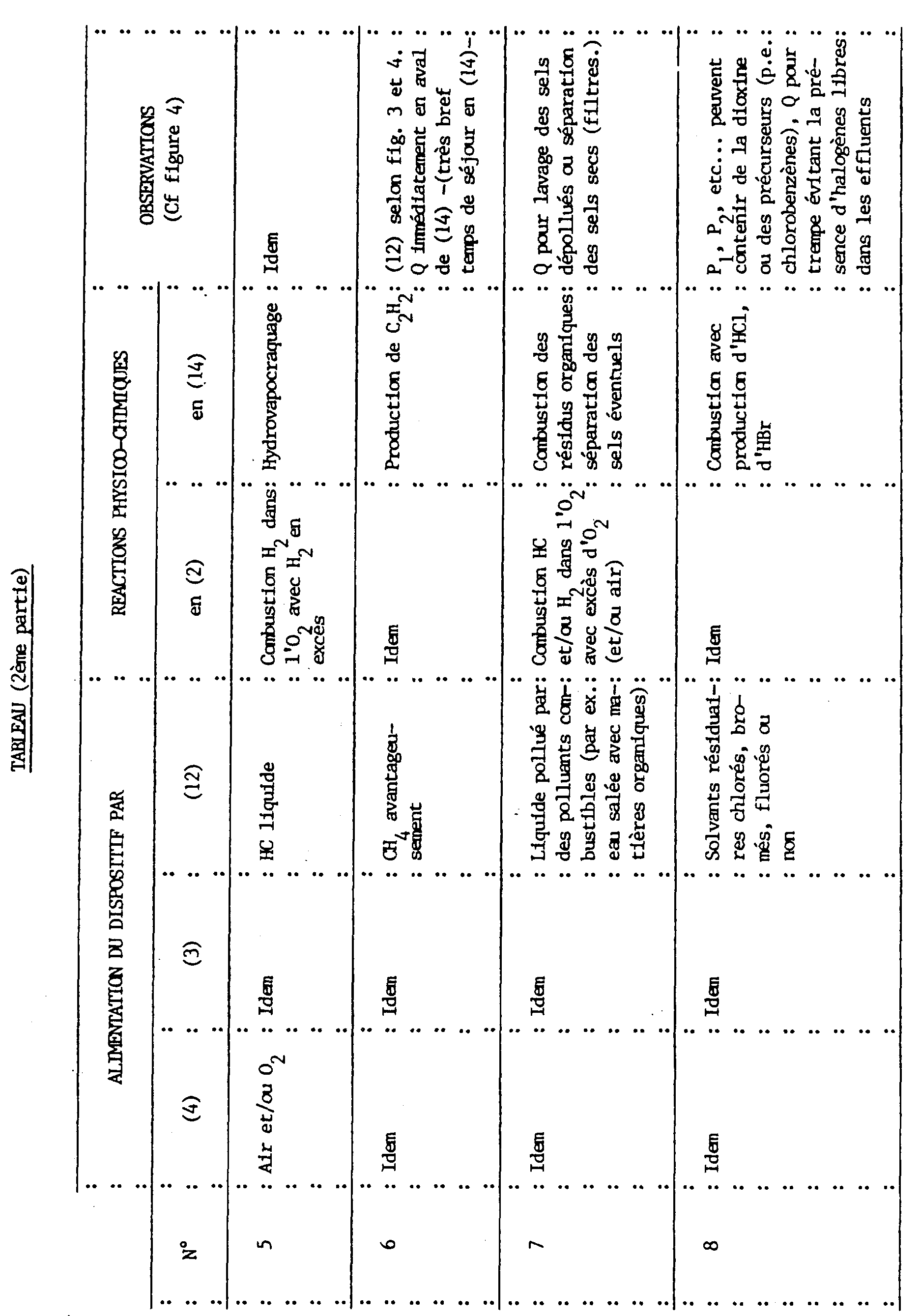

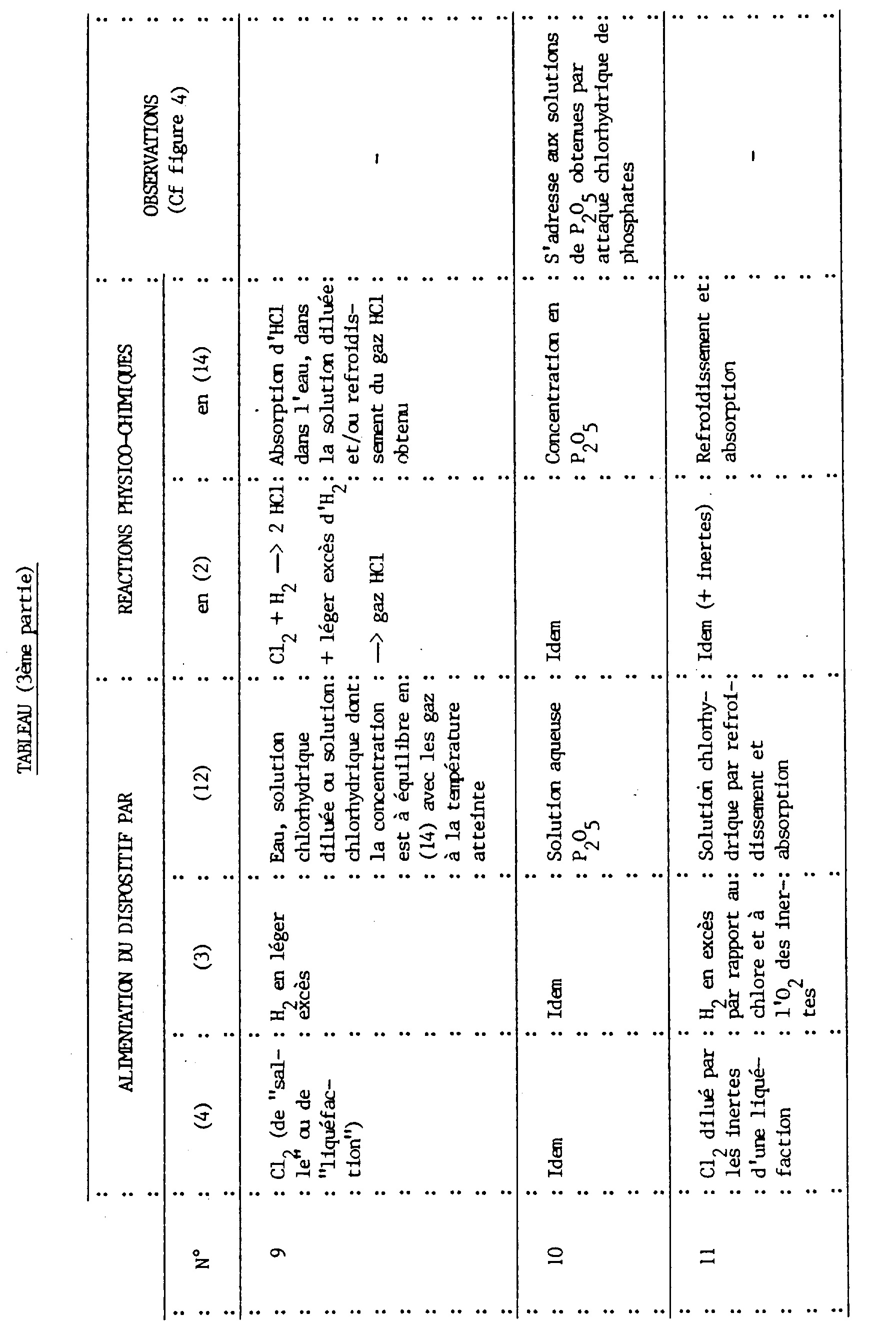

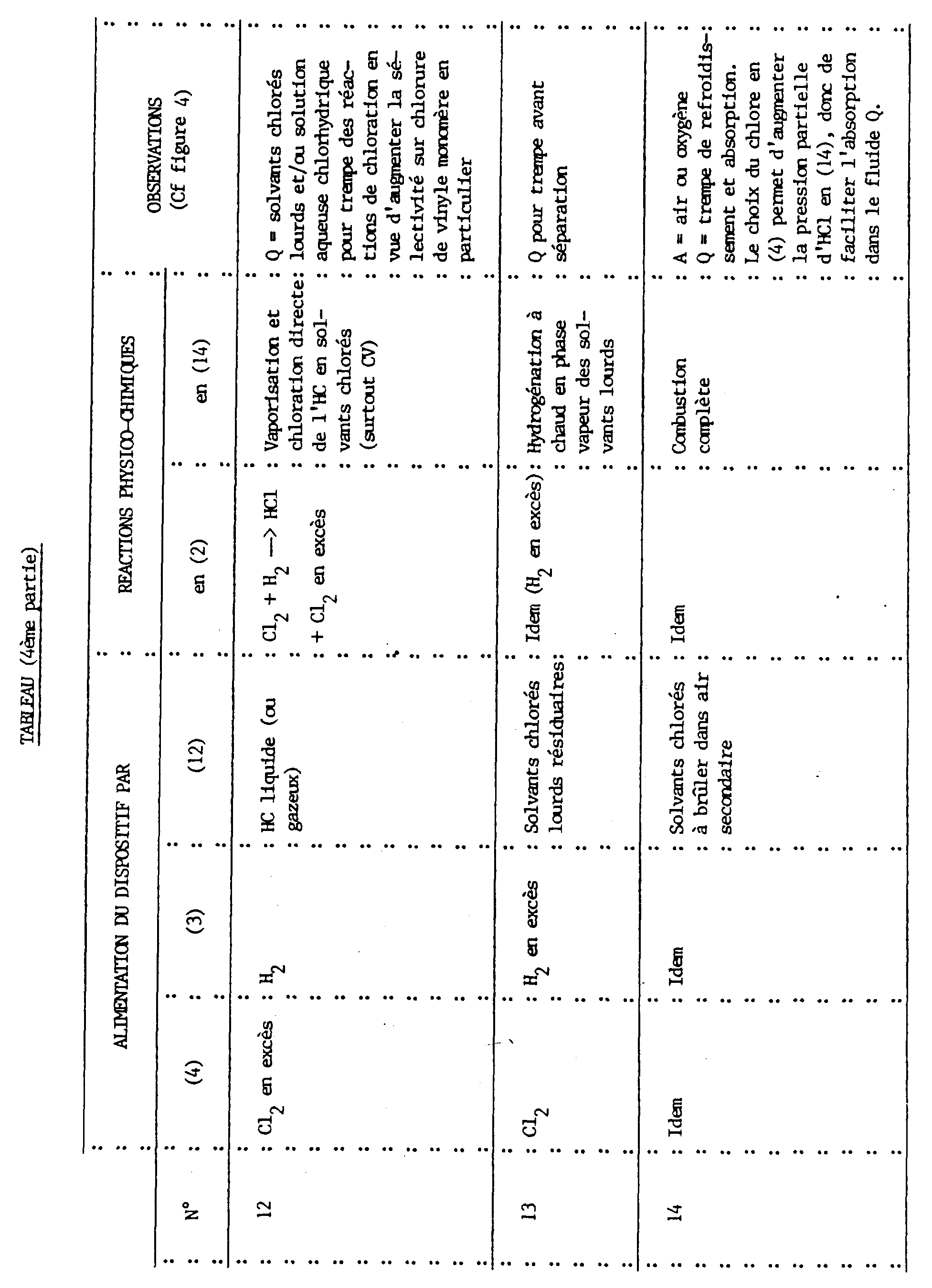

### EXEMPLE

Cet exemple a pour but d'illustrer les divers avantages du procédé selon l'invention notamment en ce qui concerne les possibilités de miniaturisation, d'obtention de densités de réactions élévées et de hautes températures. 3

Dans un appareillage réalisé en acier inoxydable non réfractaire (refroidi à l'eau) selon la figure 3 des dessins annexés, dans lequel le volume 2 est de 0,45 litre, le diamètre extérieur de 150 mm et la longueur offerte au développement de la flamme de 8 cm, on réalise la combustion complète de 8 kg/h de méthane dans 170 kg/h d'air. On observe alors la fusion d'une tige d'acier inoxydable, ce qui traduit une température de flamme au moins égale à 1550°C. Pour une pression motrice sur le méthane de 0,3 atmosphère et sur l'air de 0.25 atmosphère, on observe une flamme bleue, en rotation très rapide, qui est plaquée au fond de l'appareil et de longueur fonction du débit de gaz.

Le débit de l'eau de refroidissement est de 400 kg/h, cette eau entrant à 17°C et sortant à 25°C, ce qui traduit une perte thermique de 3,7 kW (équivalent de 0,27 kg/h de méthane, soit 3,35 % en poids).

La vitesse moyenne des gaz en combustion dans le volume 2 est de 35 m/s, et de 200 m/s dans le col de sortie.

Le temps de réaction global est donc de l'ordre de 2 millièmes de seconde, et la densité d'énergie peut ainsi être évaluée à 250 megawatts/m³.

D'autre part, aucun encrassement des parois n'est observable.

## Revendications

1. Procédé pour la mise en contact d'au moins deux composés sous forme gazeuse, provoquant une réaction exothermique dans lequel on fait s'écouler les flux gazeux d'une zone de mélange à une zone de réaction, ladite zone de mélange étant située autour d'une zone centrale séparée matériellement desdites zones de mélange et de réaction, et dans lequel on injecte au moins deux flux gazeux distincts, un comburant et un carburant, dans ladite zone de mélange en prédivisant chaque flux et en formant des motifs de mélanges élémentaires géométriquement et hydrodynamiquement répétitifs à partir desdits flux prédivisés, procédé dans lequel on impartit à au moins un des flux un mouvement tourbillon symétrique hélicoïdal autour de ladite zone centrale avec un débit suffisant pour provoquer un effet d'entraînement de l'autre ou des autres flux et l'écoulement des flux par rotation autour de ladite zone centrale, le comburant étant alimenté de manière étagée en au moins deux étages, le premier étage correspondant à un défaut en comburant, le second à au moins la stoechiométrie.

2. Procédé selon la revendication 1, caractérisé par le fait que le comburant est alimenté en au moins un étage ultérieur de dilution.

3. Procédé selon la revendication 1 ou 2, caractérisé en ce que la zone centrale est refroidie.

4. Dispositif de mise en contact de flux gazeux pour la mise en oeuvre du procédé selon l'une des revendications 1 à 3 comprenant une enveloppe (1) délimitant un premier espace annulaire 7 autour d'une chambre (2) dont une partie est pourvue d'un élément rigide (5) isolant matériellement une zone centrale de ladite chambre, ladite chambre étant munie de moyens de prédivision des flux gazeux consistant en une première série d'arnvées (3) d'un flux gazeux combustible et en une seconde série d'arrivées réparties en au moins deux étages (4) et (6) d'un flux gazeux comburant, ces séries d'arrivées étant disposées de manière à former géométriquement et hydrodynamiquement des motifs répétitifs de mélanges élémentaires desdits flux et à déboucher dans un second espace délimité dans la chambre (2) par l'élément rigide (5), dispositif dans lequel l'enveloppe 1 est munie d'une entrée tangentielle (9) du flux gazeux comburant dans le premier espace annulaire 7 destiné à impartir audit flux un mouvement tourbillon symétrique autour de ladite zone centrale et dudit élément rigide et en ce qu'il comprend des moyens pour alimenter le premier étage de la seconde série d'arrivées en défaut de comburant et le second étage de cette seconde série en une quantité permettant d'atteindre la stoechiométrie.

5. Application du procédé selon l'une des revendications 1 à 3 au traitement des effluents pollués.

6. Application du prodédé selon l'une des revendications 1 à 3 à l'incinération des résidus chlorés.

7. Application du procédé selon l'une des revendications 1 à 3 à la gazéification.

## Patentansprüche

1. Verfahren zum In-Kontakt-Bringen von mindestens zwei gasförmigen Verbindungen, die eine exotherme Reaktion hervorrufen, bei dem man die gasförmigen Ströme von einer Mischungszone zu einer Reaktionszone fließen läßt, wobei sich die genannte Mischungszone um eine zentrale Zone herum befindet, die materiell die genannten Zonen der Mischung und der Reaktion voneinander abtrennt, und bei dem man mindestens zwei verschiedene gasförmige Ströme, einen die Verbrennung fördernden und einen brennbaren, in die genannte Mischungszone einspritzt, indem man jeden Strom vorher aufteilt und indem man geometrisch und hydrodynamisch die Grundlage für die elementare gleichförmige Mischungen ausgehend von den genannten vorher aufgeteilten Strömen bildet, wobei man in dem genannten Verfahren mindestens einem der Ströme eine symmetrische, spiralförmige Wirbelbewegung um die genannte zentrale Zone herum mit einem Durchsatz einräumt, der ausreichend ist, um eine Mitnahmewirkung für den oder die anderen Ströme hervorzurufen und das Ausfließen der Ströme durch Drehung um die genannte zentrale Zone herum zu gewährleisten, wobei der verbrennungsfördernde Stoff in stufenförmiger Weise und in mindestens zwei Stufen zugeführt wird und die erste Stufe einem Mangel an verbrennungsförderndem Stoff und die zweite mindestens der Stöchiometrie entspricht.

2. Verfahren nach Anspruch 1, dadurch gekennzeichnet, daß der verbrennungsfördernde Stoff in mindestens einer späteren Stufe der Verdünnung zugeführt wird.

3. Verfahren nach Anspruch 1 oder 2, dadurch gekennzeichnet, daß die zentrale Zone gekühlt wird.

4. Vorrichtung zum In-Kontakt-Bringen von gasförmigen Strömen für die Durchführung des Verfahrens nach einem der Ansprüche 1 bis 3, umfassend eine Umhüllung (1), die einen ersten ringförmigen Raum 7 um eine Kammer (2) herum abgrenzt, von der ein Teil für ein starres Element (5) vorgesehen ist, das materiell eine zentrale Zone der genannten Kammer isoliert, wobei die genannte Kammer mit Mitteln zum Voraufteilen der gasförmigen Ströme ausgestattet ist, bestehend aus einer ersten Serie für die Zufuhr (3) eines brennbaren Gasstromes und aus einer zweiten Serie für die Aufteilung eines verbrennungsfördernden Gasstromes in mindestens zwei Stufen (4) und (6), wobei diese Serien von Zufuhr-Mitteln in der Weise angeordnet sind, daß sie geometrisch und hydrodynamisch die Grundlage für elementare gleichförmige Mischungen der genannten Ströme bilden, und die genannten Ströme in einen zweiten Raum einmünden, der von der Kammer (2) durch ein starres Element (5) abgetrennt ist, wobei in der genannten Vorrichtung die Umhüllung (1) mit einem tangentialen Eintritt (9) für den Strom des verbrennungsfördernden Gases in den ersten ringförmigen Raum (7) ausgestattet ist, vorgesehen, um dem genannten Strom eine symmetrische Wirbelbewegung um die genannte zentrale Zone und das genannte starre Element herum einzuräumen, und die Vorrichtung weiterhin Mittel zur Speisung der ersten Stufe der zweiten Serie von Zufuhr-Mitteln mit einem Mangel an verbrennungsförderndem Stoff und der zweiten Stufe der zweiten Serie mit einer solchen Menge umfaßt, die es ermöglicht, die Stöchiometrie zu erreichen.

5. Anwendung des Verfahrens nach einem der Ansprüche 1 bis 3 bei der Behandlung von verunreinigten Ausströmungen.

6. Anwendung des Verfahrens nach einem der Ansprüche 1 bis 3 bei der Verbrennung von chlorierten Rückständen.

7. Anwendung des Verfahrens nach einem der Ansprüche 1 bis 3 bei der Gaserzeugung.

## Claims

1. A process for bringing at least two compounds in the gaseous state into contact to cause an exothermic reaction, in which the gas streams are caused to flow from a mixing zone to a reaction zone, said mixing zone being located around a central zone which is separated materially from said mixing and reaction zones, and in which at least two distinct gas streams, an oxidizer and a fuel, are injected into said mixing zone by predividing each stream and forming geometrically and hydrodynamically repeating patterns of elementary mixtures from said predivided streams, in which process at least one of the streams is caused to move in a symmetrical helicoidal vortex about said central zone at a flow rate which is sufficient to entrain the other stream(s) and cause the streams to flow by rotation about said central zone, the oxidizer being supplied in at least two stages, the first stage corresponding to a deficiency of oxidizer, and the second stage at least corresponding to the stoichiometric quantity.

2. A process according to claim 1, characterised in that the oxidizer is supplied at at least one subsequent dilution stage.

3. A process according to claim 1 or claim 2, characterised in that the central zone is cooled.

4. An apparatus for bringing gas streams into contact, for carrying out the process as claimed any one of claims 1 to 3, comprising an envelope (1) delimiting a first annular space (7) around a chamber (2), one part of the chamber being provided with a rigid element (5) which materially isolates a central zone from said chamber, said chamber being provided with means for predividing the gas streams, consisting of a first series of inlets (3) for a fuel gas stream, and a second series of inlets distributed in at least two stages (4) and (6) for an oxidizer gas stream, these series of inlets being located so as to form geometrically and hydrodynamically repeating patterns of elementary mixtures of said streams, and to open into a second space delimited in the chamber (2) by the rigid element (5), in which apparatus the envelope (1) is provided with a tangential inlet (9) in the first annular space (7) for the oxidizer gas stream, to cause said stream to move in a symmetrical vortex about said central zone, and said rigid element, the apparatus further comprising means for supplying the first stage of the second series of inlets with a deficiency of oxidizer and the second stage of the second series with a quantity sufficient to achieve stoichiometry.

5. The application of a process according to any one of claims 1 to 3 to the treatment of polluted effluents.

6. The application of a process according to any one of claims 1 to 3 to the incineration of chlorinated residues.

7. The application of a process according to any one of claims 1 to 3 to gasification.
